# EUROPEAN PATENT SPECIFICATION

(11) **EP 0 804 863 B1**
(45) Date of publication and mention of the grant of the patent: **09.01.2002**
(21) Application number: 96930329.6
(22) Date of filing: 01.10.1996
(51) Int. Cl.: H05B 41/288

(54) **CIRCUIT ARRANGEMENT**
SCHALTUNGSANORDNUNG
MONTAGE DE CIRCUIT

(30) Priority: 09.10.1995 EP 95202699
(43) Date of publication of application: 05.11.1997
(73) Proprietor: Koninklijke Philips Electronics N.V., 5621 BA Eindhoven (NL)
(72) Inventor: BLANKERS, Hendrik, J., 5656 AA Eindhoven (NL)
(74) Representative: Dusseldorp, Jan Charles
(86) International application number: PCT/IB96/01030
(87) International publication number: WO 97/14274

(56) References cited:
- US-A- 3 931 567
- US-A- 3 969 652
- US-A- 4 258 309

## Description

The invention relates to a circuit arrangement for igniting and operating a high-pressure discharge lamp, provided with
- switching means, inductive means and rectifying means together forming a Buck converter, connected to input terminals for connection to a supply source and output terminals for connection of the lamp, comprising means for supplying the lamp with a current through periodic switching of the switching means alternately into a conducting and a non-conducting state by means of a switch-on and switch-off signal, respectively,
- which inductive means comprise a primary and a secondary winding, the secondary winding forming part of an integration network for generating the switch-off signal.

A circuit arrangement of the kind mentioned in the opening paragraph is known from EP-A-0 401 931 = USP 5,068,572. The known circuit arrangement is highly suitable for igniting and operating a high-pressure discharge lamp which forms part of a projection TV installation.

The type of switch mode power supply here referred to as Buck converter is also known under other designations such as downconverter, step-down converter, inductor-coupled step-down converter, direct-down converter.

Although in the Buck converter the input terminals and output terminals are usually directly electrically connected, it is equally possible for the circuit to be provided with an electric separation between input and output terminals, for example, in the form of a transformer.

In the known circuit arrangement, the Buck converter operates in a self-oscillatory mode which is characterized by the fact that the generation of the switch-on signal, and thus the process of switching of the switching means from the non-conducting to the conducting state, is initiated the moment the current through the inductive means has become zero, whereupon switching takes place immeditely.

It is possible with the known circuit arrangements to supply a substantially constant power to the connected lamp over a comparatively wide current and voltage range, so that a very constant luminous flux is generated by the lamp. The self-oscillatory mode is characterized by low switching losses in the periodic switching of the switching means, especially in the current-voltage range where lamp operation is stable. Preferably, the downconverter is so dimensioned that switching from the non-conducting to the conducting state takes place with a frequency above the limit of human hearing during stable lamp operation. This also has the result that the dimensions of the inductive means can remain comparatively small.

For generating the switch-off signal, a comparison is made in the known circuit arrangement between a separately set control signal and a signal prevalent at an output of the integration network and proportional to the value of the current through the inductive means. The moment the signal at the output of the integration network becomes equal to the separately set control signal, the switch-off signal is generated, whereupon the switching means are switched from the conducting to the non-conducting state.

In the known circuit arrangement, the integration network comprises capacitive means, and the voltage across the capacitive means is the signal which is proportional to the value of the current through the inductive means. Although a controlled current source of comparatively simple construction is realized with the known circuit arrangement, with which also the power dissipated in a load (the lamp) can be controlled, the known circuit arrangement has a number of disadvantages.

Under certain conditions, the frequency with which the switching means are switched is found to assume comparatively very low values in the known circuit arrangement. The occurrence of the comparatively low switching frequencies leads to the problem of noise pollution since the switching frequency enters the range of human hearing.

This disadvantage can be counteracted in that the time during which the switching means remain in the non-conducting state is limited. Without special measures this will have the result that the Buck converter under said circumstances can operate in a non-self-oscillatory mode, during which a continuous current will flow through the inductive means. It was found, however, that the known circuit is only capable of reliable operation in the self-oscillatory mode, which accordingly represents a disadvantage.

The invention has for its object to provide a circuit arrangement in which said disadvantages are substantially eliminated. According to the invention, a circuit arrangement of the kind mentioned in the opening paragraph is for this purpose characterized in that the circuit arrangement is provided with detection means for detecting a current flowing through the rectifying means.

Detection of the current flowing through the rectifying means is found to render it possible to realize an adaptation in the circuit arrangement with which the operation of the circuit arrangement in the non-self-oscillating mode is possible. In particular, a signal may advantageously be generated by the detection means for the supply of the integration network during the period of non-conductance of the switching means. The signal at the output of the integration network may thus remain proportional to the value of the current through the inductive means by a simple but effective method. It is achieved thereby that the signal at the output of the integration network corresponds to the value of the current through the inductive means at the moment at which the switching means become conducting. This is important for the generation at the correct moment of the switch-off signal for rendering the switching means non-conducting, which takes place on the basis of the signal which is proportional to the value of the current through the inductive means. Detection means connected between the rectifying means and a direct electrical connection present between one of the input terminals and one of the output terminals have major advantages. This is true in particular when the detection means comprise an ohmic impedance. On the one hand, a very simple and reliable detection of the value of the current through the rectifying means is realized in this way. On the other hand, the signal generated by the detection means is independent of the voltage supplied by the supply source. In addition, it is achieved in this manner that current flows through the detection means only when the rectifying means are conducting. It is also counteracted in this way that a lamp circuit connected to the connection terminals can act as a source of radio interference.

Preferably, the ohmic impedance is shunted by an op-amp of which an output is connected to the output of the integration network, so that a signal proportional to the value of the current through the inductive means is present at all times at the output of the integration network.

Aspects of the invention described above and further aspects will be described in more detail below with reference to a drawing of an embodiment.

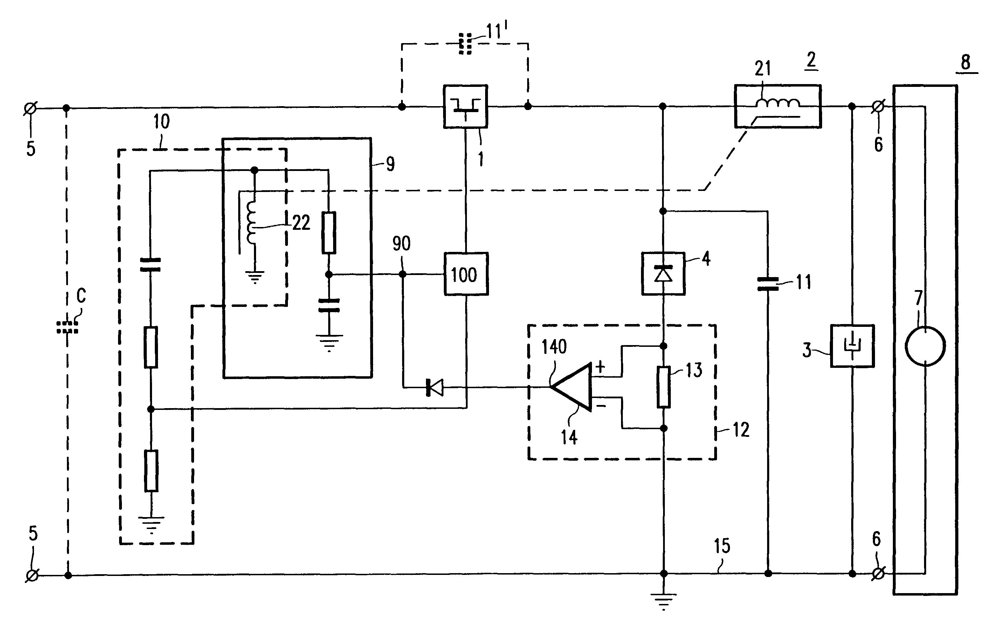

The drawing shows a diagram of a circuit arrangement for igniting and operating a high-pressure discharge lamp 7, provided with
- switching means 1, inductive means 2 and rectifying means 4, together forming a Buck converter, connected to input terminals 5 for connection to a supply source and output terminals 6 for connection of the lamp, comprising means 8 for supplying the lamp with a current through periodic switching of the switching means alternately into a conducting and a non-conducting state by means of a switch-on and switch-off signal, respectively,
- which inductive means 2 comprise a primary and a secondary winding 21, 22, the secondary winding 22 forming part of an integration network 9 with an output 90 for generating the switch-off signal.

The secondary winding also forms part of a voltage divider circuit 10 for generating the switch-on signal.

The Buck converter is also provided with capacitive buffer means 3.

A direct electrical connection 15 is present between one of the input terminals 5 and one of the output terminals 6. An ohmic impedance 13 is connected here between the direct connection 15 and the rectifying means 4. The ohmic impedance forms part of detection means 12 for detecting a current flowing through the rectifying means. The ohmic impedance is shunted by an op-amp 14 of which an output 140 is connected to the output 90 of the integration network 9. It is achieved thereby that the value of the current through the rectifying means is reliably detected and that the signal at the output of the integration network remains proportional to the value of the current through the inductive means.

The circuit arrangement in addition comprises a capacitance 11 which together with the primary winding 21 forms a tuned circuit the moment the rectifying means 4 pass no current anymore with the switching means 1 being in the non-conducting state. The voltage thus arising across the primary winding induces a voltage in the secondary winding 22, which in its turn forms a voltage source for generating the switch-on signal through voltage divider circuit 10. In an alternative embodiment, a converter portion (not shown) is included between input terminals 5 and switching means 1 for converting the voltage of the supply source to a DC voltage suitable for operating the switching means. The converter portion comprises inter alia a comparatively large capacitor C connected between the input terminals. The tuned circuit in this case comprises the capacitor C and a capacitor 11' connected across the switching means. Capacitance 11 is not necessary in this embodiment.

The switch-off signal generated in the integration network 9 is sent to a control circuit 100, as is the switch-on signal generated in the voltage divider circuit 10. The control circuit 100 provides the actual control necessary for switching the switching means.

The means 8 containing the lamp comprise a commutator circuit in many practical cases because a current of periodically changing polarity flows through the lamp during lamp operation. The means 8 in general also comprise an igniter circuit for generating a voltage pulse for igniting the lamp. Both the commutator circuit and the ingiter circuit will generally form part of the circuit arrangement according to the invention. The commutator means may be omitted in cases where the lamp is suitable for DC operation.

In a practical realization of the circuit arrangement described, the latter is suitable for operating a high-pressure metal halide lamp of the UHP type, make Philips. The practical realization of the circuit arrangement is suitable for connection to a 220 V, 50 Hz supply source. For this purpose, the circuit arrangement is provided with a circuit portion, which is known per se and not shown in the drawing, arranged between the input terminals and the switching means for converting the AC voltage connected to the input terminals into a DC voltage suitable for operating the switching means. The converter portion comprises between the input terminals a capacitor C of 47 µF. A MOSFET, type IRF840, make International Rectifier, serves as the switching means 1. The inductive means 2 are formed by a transformer with a ferrite core, a primary winding of 100 turns and a secondary winding of 30 turns. The capacitive buffer means have a capacitance value of 0.82 µF. The rectifying means 4 are formed by a type BYV29F500 diode, make Philips. The switching means 1 are shunted by the capacitor 11' of 560 pF. The detection means 12 in the practical embodiment comprise an ohmic impedance of 0,15 Ω shunted by an operational amplifier of the CA 3140 M96 type. The amplification factor which is set in dependence on the value of ohmic impedance 13, on the dimensions of the components of the integration network, and on the winding ratio between primary and secondary winding of the inductive means 2, is 100/30.

The practical realization of the circuit arrangement described is highly suitable for use in a projection TV installation.

An alternative possible application is, for example, the operation of a discharge lamp in a motorcar lantern system.

## Claims

1. A circuit arrangement for igniting and operating a high-pressure discharge lamp (7), provided with
- switching means (1), inductive means (2) and rectifying means (4) together forming a Buck converter, connected to input terminals (5) for connection to a supply source and output terminals (6) for connection of the lamp comprising means for supplying the lamp with a current through periodic switching of the switching means alternately into a conducting and a non-conducting state by means of a switch-on and switch-off signal, respectively,
- which inductive means (2) comprise a primary (21) and a secondary (22) winding, the secondary (22) winding forming part of an integration network (9) provided with an output (90) for generating the switch-off signal,
**characterized in that** the circuit arrangement is provided with detection means (12) for detecting a current flowing through the rectifying means.

2. A circuit arrangement as claimed in Claim 1, **characterized in that** the detection means (12) generate a signal for supplying the integration network during the period in which the switching means are non-conducting.

3. A circuit arrangement as claimed in Claim 1 or 2, **characterized in that** a direct electrical connection is present between one of the input terminals (5) and one of the output terminals (6), and **in that** the detection means (12) are connected between said direct connection and the rectifying means (4).

4. A circuit arrangement as claimed in Claim 1, 2 or 3, **characterized in that** the detection means comprise an ohmic impedance (13).

5. A circuit arrangement as claimed in Claim 4, **characterized in that** the ohmic impedance (13) is shunted by an op-amp (14) of which an output is connected to the output of the integration network.

## Patentansprüche

1. Schaltungsanordnung zum Zünden und Betreiben einer Hochdruck-Entladungslampe (7), versehen mit
- Schaltmitteln (1), induktiven Mitteln (2) und Gleichrichtmitteln (4), die zusammen einen Buck-Umrichter bilden, verbunden mit Eingangsklemmen (5) zum Anschluss an eine Speisequelle und Ausgangsklemmen (6) zum Anschluss der Lampe, die Mittel umfasst zum Speisen der Lampe mit einem Strom, indem die Schaltmittel mittels eines Einschalt- bzw. Abschaltsignals periodisch abwechselnd in einen leitenden und einen nichtleitenden Zustand geschaltet werden,
- welche induktiven Mittel (2) eine Primär- (21) und eine Sekundärwicklung (22) umfassen, wobei die Sekundärwicklung (22) Teil eines Integrationsnetzwerks (9) ist, das mit einem Ausgang (90) zum Generieren des Abschaltsignals versehen ist,
**dadurch gekennzeichnet, dass** die Schaltungsanordnung mit Detektionsmitteln (12) zum Detektieren eines durch die Gleichrichtmittel fließenden Stroms versehen ist.

2. Schaltungsanordnung nach Anspruch 1, **dadurch gekennzeichnet, dass** die Detektionsmittel (12) während der Zeitdauer, in der die Schaltmittel nichtleitend sind, ein Signal zum Speisen des Integrationsnetzwerks erzeugen.

3. Schaltungsanordnung nach Anspruch 1 oder 2, **dadurch gekennzeichnet, dass** zwischen einer der Eingangsklemmen (5) und einer der Ausgangsklemmen (6) eine galvanische Verbindung vorhanden ist und dass die Detektionsmittel (12) zwischen die genannte galvanische Verbindung und die Gleichrichtmittel (4) geschaltet sind.

4. Schaltungsanordnung nach Anspruch 1, 2 oder 3, **dadurch gekennzeichnet, dass** die Detektionsmittel einen ohmschen Widerstand (13) umfassen.

5. Schaltungsanordnung nach Anspruch 4 , **dadurch gekennzeichnet, dass** der ohmsche Widerstand (13) von einem Operationsverstärker (14) nebengeschlossen wird, der einen mit dem Ausgang des Integrationsnetzwerks verbundenen Ausgang hat.

## Revendications

1. Dispositif de circuit servant à l'amorçage et au fonctionnement d'une lampe à décharge à haute pression munie de
- moyens de commutation (1), moyens inductifs (2) et moyens de redressement (4) formant ensemble un convertisseur de Buck, connecté à des bornes d'entrée (5) pour la connexion à une source d'alimentation et à des bornes de sortie (6) pour la connexion à la lampe comprenant des moyens pour l'alimentation de la lampe en un courant par commutation périodique des moyens de commutation alternativement en un état conducteur et un état non conducteur respectivement à l'aide d'un signal de mise en circuit et d'un signal de mise hors circuit,
- lesquels moyens inductifs (2) comprennent un enroulement primaire (21) et un enroulement secondaire (22), l'enroulement secondaire (22) faisant partie d'un réseau d'intégration (9) muni d'une sortie (9c) pour engendrer le signal de mise hors circuit,
- **caractérisé en ce que** le dispositif de circuit est muni de moyens de moyens de détection (12) pour la détection d'un courant circulant à travers les moyens de redressement.

2. Dispositif de circuit selon la revendication 1, **caractérisé en ce que** les moyens de détection (12) engendrent un signal pour l'alimentation du réseau d'intégration pendant la période pendant laquelle les moyens de commutation sont à l'état non conducteur.

3. Dispositif de circuit selon la revendication 1 ou 2, **caractérisé en ce qu'**une connexion électrique directe est présente entre l'une des bornes d'entrée (15) et l'une des bornes de sortie (6) et **en ce que** les moyens de détection (12) sont connectés entre ladite connexion directe et les moyens de redressement (4).

4. Dispositif de circuit selon la revendication 1, 2 ou 3, **caractérisé en ce que** les moyens de détection sont munis d'une impédance ohmique (13).

5. Dispositif de circuit selon la revendication 4, **caractérisé en ce que** l'impédance ohmique (13) est shuntée par un amplificateur opérationnel (14), dont une sortie est connectée à la sortie du réseau d'intégration.
